Europäisches Patentamt
European Patent Office
Office européen des brevets

(19) (11) Publication number: **0 206 157 A2**

# EUROPEAN PATENT APPLICATION

(12)

(21) Application number: 86108065.3

(22) Date of filing: 12.06.86

(51) Int. Cl.⁴: C08F 2/22

(30) Priority: 28.06.85 US 750693

(43) Date of publication of application: 30.12.86 Bulletin 86/52

(84) Designated Contracting States: AT BE DE FR GB IT

(71) Applicant: **SUN CHEMICAL CORPORATION**
200 Park Avenue
New York New York(US)

(72) Inventor: **Lindemann, Martin K.**
102 Independence Drive
Greenville South Carolina(US)

(74) Representative: **Struif, Bernward, Dipl.-Chem. Dr. et al**
Patentanwaltsbüro Tiedtke, Bühling, Kinne Grupe, Pellmann, Grams, Struif Bavariaring 4
D-8000 München 2(DE)

## (54) Copolymer emulsion.

(57) An aqueous copolymer emulsion is prepared which is particularly useful as a durable sizing composition having colloidally suspended therein a copolymer containing a softening monomer, a latent crosslinking monomer, an active crosslinking monomer, an ethylinically unsaturated carboxylic acid and optionally a hardening monomer.

EP 0 206 157 A2

# COPOLYMER EMULSION

## FIELD OF THE INVENTION

This invention relates to a copolymer emulsion containing colloidally suspended therein a copolymer which forms an insoluble crosslinked network upon the application of energy which is resistant to hydrolysis in a caustic solution and thus is particularly useful in durably sizing textile yarns, providing a yarn with desirable processing, textural and aesthetic properties.

## BACKGROUND OF THE INVENTION

In the processing of textile yarns to form fabrics, the sizing of textile yarns with polymeric materials to facilitate the weaving of the yarns into fabrics is conventional. A protective sizing composition is applied to the yarn to protect the yarns from being abraded or damaged during fabric forming procedures, such as weaving. Typically, the sizing composition contains water soluble polymers such as polyacrylic acids, polymethacrylic acids, polyacrylamides, polyvinyl alcohols, starches, and modified polyesters, alone or in combination. Before subjecting such formed fabrics to a finishing process such as bleaching, dyeing or other wet processing steps, the sizing composition is removed because the sizing composition interferes with the finishing process by partially dissolving in the process water. Furthermore, the sizing composition tends to impart undesirable textural attributes to the fabric by providing a harsh handle or feel to the fabrics when the sizing composition is not removed from the fabric prior to the finishing process.

Therefore, according to current conventional industry practices the sizing composition is removed before the wet processing (finishing process) of the fabric starts, which is a costly and time consuming procedure. Also, the removed sizing composition dissolved in water, either pose ecological problems and require treatment of the waste water streams or have to be recovered by procedures which are very costly.

There have been previous attempts made to provide a durable sizing composition, i.e. a sizing composition which avoids the need for removal prior to the finishing process. However, these durable sizing compositions have been generally unsatisfactory. In order to be acceptable for use in commercial production, a durable sizing composition must meet a number of exacting criteria. The composition must be applied using conventional textile slashing equipment and must protect the yarn during fabric forming procedures. The durable sizing composition needs to be resistant to hydrolysis in caustic solution so it is not removed by or chemically degraded by caustic scouring operations, bleaching, mercerizing, dyeing, or other fabric finishing processes. At least 50% of the sizing composition, preferably at least 75%, must remain on the fabric after the finishing process. Further, the durable sizing composition which is present on the yarns must be fully compatible with conventional dyes and finishing agents so that the fabric may be dyed and finished using conventional dyes and production processes. In addition, it must meet all of the foregoing criteria without imparting undesirable textural or aesthetic attributes, such as a harsh handle or feel. To impart a desirable soft handle or feel to the fabric the copolymers in the sizing composition must have a Tg of less than 0°C, with Tg (glass transition temperature) being the temperature at which a polymer changes from a hard, brittle material to a soft, rubber like or plastic state.

Prior attempts at producing a durable sizing composition have generally not satisfied the foregoing exacting criteria and have therefore not been acceptable for use in commercial operations, except perhaps in certain very specialized applications Typically, the prior approaches have involved attempts to use conventional non-durable sizing agents, and to cause them to become permanently bound to the yarn through the use of a crosslinking agent. This approach is described, for example, in U.S. Patents 3,676,207 and 3,666,400, and in European patent application 57,985.

## SUMMARY OF THE INVENTION

Briefly, the present invention provides an aqueous copolymer emulsion containing colloidally suspended therein a copolymer which forms an insoluble crosslinked network upon the application of energy and which is resistant to hydrolysis in a caustic solution and thus is particularly suitable for use as a durable sizing composition. The emulsion copolymer comprises 50 to 95% of a softening monomer, 0.5 to 10% of a latent crosslinking monomer, 0.01 to 0.5% of an active crosslinking monomer, 0.5 to 5% of an ethylenically unsaturated carboxylic acid and from 0 to 35% of a hardening monomer, said hardening monomer in an amount effective to provide a copolymer emulsion containing a copolymer with a Tg of less than or equal to 0°C.

DETAILED DESCRIPTION

The aqueous copolymer emulsion of the present invention is prepared by conventional batch, semi-continuous or continuous polymerization procedures. These are taught, for example in U.S. Pat. No. 2,754,280, 2,795,564, 3,732,184, and in the book entitled "The Applications of Synthetic Resin Emulsion" by H. Warson, Ernest Benn Limited, London, 1972, pp. 85 to 132. The monomers which are copolymerized in accordance with the present invention are ethylenically unsaturated compounds, comprising a softening monomer, a hardening monomer, a latent crosslinking monomer, an active crosslinking monomer, and an ethylenically unsaturated carboxylic acid.

For the purpose of this description, the term "softening monomer" means a vinyl monomer, which has a Tg of less than 0°C, preferably -20 to 80°C. The softening monomer when copolymerized with a hardening monomer will lower the glass transition temperature (Tg) of the copolymer or, in other words, soften the copolymer. The softening monomer may be a mono-or diethylenically unsaturated monomer. Examples of monoethylenically unsaturated softening monomers are: vinyl esters of alkanoic acids having from 3 to about 18 carbon atoms, such as vinyl propionate, vinyl butyrate, vinyl isobutyrate, vinyl valerate, vinyl 2-ethylhexanoate, vinyl isooctanoate, vinyl nonoate, vinyl decanoate, vinyl pivalate, vinyl ester (e.g. Versatic Acid-TM, a branched carboxylic acid, marketed by the Shell Oil Corporation), vinyl laurate, and vinyl stearate; also alpha-olefins, such as ethylene, propylene, butylene, isobutylene, and pentene and the like; also maleate, fumarate, and itaconate esters of $C_1$-$C_8$ alcohols, such as dibutyl maleate, dibutyl fumarate, dibutyl itaconate; also alkyl acrylates with an alkyl group having from 1 to 18 carbon atoms, such as methyl, ethyl, n-butyl, sec-butyl, the various isomeric pentyl, hexyl, heptyl, and octyl - (especially 2-ethylhexyl), lauryl, cetyl, stearyl and like groups; also alkyl esters of methacrylic acid with an alkyl group having from 4 to about 18 carbon atoms, such as n-butyl, n-hexyl, 2-ethylhexyl, n-octyl, lauryl, cetyl, stearyl and like groups; also vinyl alkyl ethers, having an alkyl group with 1 to 18 carbon atoms, such as methyl vinyl ether, ethyl vinyl ether, butyl vinyl ether and stearyl vinyl ether. Examples of softening monomers are diene monomers, such as butadiene, chloroprene, and isoprene and similar compounds. These softening monomers are present in the amount of 50 to 95 percent by weight of the copolymer (solids) in the emulsion.

By the term "hardening" monomer is meant a monomer, which when copolymerized with a softening monomer, will raise the glass transition temperature of the copolymer, or, in other words, will harden the copolymer. The hardening monomer will have a Tg of greater than 0°C, preferably a Tg of 20°C to 115°C. Examples of hardening monomers include aromatic vinyl monomers, such as styrene, alpha-methylstyrene, vinyl toluene, 2-bromostyrene, and p-chlorostyrene; also acrylonitrile; also vinyl halide monomers, such as vinyl chloride and vinylidene chloride; also alkyl methacrylates, such as methyl methacrylate and ethyl methacrylate; also benzyl acrylate and t-butyl acrylate; also vinyl esters of aromatic acids, such as vinyl benzoate; also vinyl esters of alkanoic acids having from 1-2 carbons, such as vinyl acetate. The amount of hardening monomer necessary to obtain the desired glass transition temperature (Tg) of the copolymers is calculated by using a method described by Fox,Bull.Am.Physics Soc., 1,3, page 123 (1956). The following equation allows the calculation of the Tg:

$$\frac{1}{Tg_{Copolymer}} = \frac{W_1}{Tg_{P1}} + \frac{W_2}{Tg_{P2}} + \frac{W_3}{Tg_{P3}}$$

where $W_1$, $W_2$ and $W_3$ are the weight fractions of the comonomers $M_1$, $M_2$ and $M_3$ respectively, and $Tg_{p1}$, and $Tg_{p2}$and $Tg_{p3}$ are the glass transition temperatures in degrees Kelvin of the homopolymers $P_1$, $P_2$, and $P_3$ derived from monomers $M_1$, $M_2$ and $M_3$ respectively, and $Tg_{Copolymer}$ is the glass transition temperature of the resulting copolymer in degrees Kelvin. Tables of the glass transition temperatures of the homopolymers are readily available and include the one in "Polymer Handbook" 2nd edition, (Wiley, 1975) Section III, pp. 143 to 192 by W.A. Lee and R.A. Rutherford. Monomers may also be selected to obtain the appropriate Tg through the use of the "Rohm and Haas Acrylic Glass Temperature Analyzer", publication CM-24 4/76 of Rohm and Haas Co., Philadelphia, Pa. "Tg" or glass transition temperature is described in the book by Flory, "Principles of Polymer Chemistry", pp. 56 and 57, Cornell University Press (1953). In the copolymer emulsions of this invention, the amount of hardening monomers in the copolymer emulsion is about from 0 to 35

percent by weight of the copolymer, with the amount of hardening monomer being effective to provide a Tg of less than 0°C. The glass transition temperature (Tg) of the emulsion copolymer of the present invention is less than or equal to 0°C., preferably from -60° to 0°C. and optimally from -40°C to 0°C.

By the term "latent crosslinking monomer" is meant a polyfunctional monomer wherein a portion of the functionality enters into the copolymerization with other monomers in the copolymer emulsion, with the residual functionality causing crosslinking of the copolymer upon the subsequent application of energy, generally by applying heat, e.g. by drying and curing of the latex particles, often in the presence of a catalyst, or by applying radiation. The latent crosslinking monomer provides thermosetting characteristics to the copolymer emulsion. Upon the subsequent application of energy the latent crosslinking monomer forms an insoluble crosslinked network, with the crosslinking being triggered generally by heat or radiation after the copolymer emulsion has been formed and applied to a fabric. This insoluble crosslinked network on the fabric thus provides a durable sizing composition. Examples of latent crosslinking monomers are: N-alkylolamides of alpha, beta ethylenically unsaturated carboxylic acids having 3-10 carbons, such as N-methylol acrylamide, N-ethanol acrylamide, N-propanol acrylamide, N-methylol mathacrylamide, N-ethanol methacrylamide, N-methylol maleimide, N-methylol maleamide, N-methylol maleamic acid, N-methylol maleamic acid esters; the N-alkylol amides of the vinyl aromatic acids, such as N-methylol-p-vinylbenzamide and the like; also N-(alkoxymethyl) acrylates and methacrylates, where the alkyl group has from 1-8 carbon atoms, such as N-(methoxymethyl) acrylamide, N-(butoxymethyl) acrylamide, N-(methoxymethyl) methacrylamide, and N-(butoxymethyl) methacrylamide. Mixtures of acrylamide, methacrylamide, or allyl carbamate with the afore mentioned latent crosslinking monomers may also be employed. Other monomers in this category are N-methylol allyl carbamate, and the N-(alkoxymethyl) allyl carbamates, where the alkyl group has from 1 to 8 carbon atoms, such as N-(butoxymethyl) allyl carbamate and N-(methoxymethyl) allyl carbamate, and mixtures of these monomers with allyl carbamate, acrylamide or methacrylamide. Epoxy containing monoethylenically unsaturated compounds, such as glycidyl acrylate, glycidyl methacrylate and vinyl glycidyl ether function as latent crosslinking monomers in conjunction with mono-and diethylenically unsaturated carboxylic acids, such as acrylic methacrylic and itaconic acid, when catalyzed with an alkaline catalyst, such as potassium or sodium carbonate, diethylenetriamine and the like. Hydroxyethyl acrylate, hydroxypropyl acrylate and the corresponding methacrylates provide latent crosslinking when combined with N-alkylolamides of alpha, beta ethylenically unsaturated acids having 3-10 carbon atoms or with the acids themselves by ester formation Another group of latent crosslinking monomers is described in U.S. Patents No. 3,678,098 and 4,009,314. These are cationic chlorohydrin compounds having the following formula:

$$\left[ CH = \overset{R}{\overset{|}{C}} - COO-A- \underset{\underset{CH_3}{|}}{\overset{\overset{CH_3}{|}}{N}} - CH_2 - \underset{\underset{OH}{|}}{CH} - \underset{\underset{X}{|}}{CH_2} \right]^{+} Y$$

where R=methyl or H
A=alkylene
X,Y=halogen

The crosslinking reation of these monomers is also catalized by the alkaline compounds mentioned above. The amount of latent crosslinking monomer in the copolymer of the present invention is about from 0.5 to 10 percent, preferably from about 2 to 6 percent by weight of the copolymer.

By the term "active crosslinking monomer" is meant a functional monomer which immediately provides crosslinking and branching of the polymer during the initial formation of the emulsion copolymer to increase the molecular weight of the emulsion copolymer. Subsequent drying or other curing techniques are not required for the crosslinking and branching of the emulsion copolymer by the active crosslinking monomer. Monomers of this

type generally comprise compounds which contain 2 to 5 ethylenically unsaturated groups in one molecule separated by an ester or ether group, or by an aromatic or nitrogenous ring structure, where the unsaturated groups are capable of undergoing addition polymerization by free radical means. Suitable active crosslinking monomers include alkylene glycol diacrylates and methacrylates, such as ethylene glycol diacrylate, 1,3-butylene glycol diacrylate, propylkene glycol diacrylate, triethylene glycol dimethacrylate etc., 1,3-glycerol dimethacrylate, 1,1,1-trimethylol propane dimethacrylate, 1,1,1,-trimethylol ethane diacrylate, pentaerythritol trimethacrylate, sorbitol pentamethacrylate, methylene bisacrylamide, methylene bismethacrylamide, divinyl benzene, vinyl methacrylate, vinyl crotonate, vinyl acrylate, divinyl adipate; also di-and tri-allyl compounds, such as triallyl cyanurate, triallyl isocyanurate, diallyl phthalate, allyl methacrylate, allyl acrylate, diallyl maleate, diallyl fumarate, diallyl itaconate, diallyl malonate, diallyl carbonate, triallyl citrate, triallyl aconitate; also divinyl ether, ethylene glycol divinyl ether and the like. The amount of active crosslinking monomer in the copolymer emulsion of the present invention is from about 0.01 to 0.5 percent, preferably from about 0.05 to 0.25 percent by weight of the copolymer.

An ethylenically unsaturated carboxylic acid is added to the emulsion copolymer to provide running properties, i.e. so the emulsion can be applied to the yarn without sticking. The unsaturated carboxylic acid prevents premature crosslinking of the emulsion copolymer during the application of the sizing composition on the slashes, preventing the buildup of polymers on the padrolls during slashing. Generally, any ethylenically unsaturated mono- or dicarboxylic acid may be used to provide the carboxyl functionality to the copolymer. Examples of suitable acids include the monocarboxylic ethylenically unsaturated acids such as acrylic, crotonic, and methacrylic acid; the dicarboxylic ethylenically unsaturated acids such as maleic, fumaric, itaconic, and citraconic acid, as well as the half esters of these dicarboxylic acids with $C_1$-$C_{12}$ alcohols. Examples of these monomeric acids are monomethylmaleate, monoethylmaleate, monobutylmaleate, and mono(2-ethylhexyl)maleate and the like. The amount of unsaturated acids present in the emulsion copolymer of the present invention are about 0.5 to 5 percent, preferably 1 to 2.5 percent, by weight of the copolymer. The amount is sufficient to provide redispersing properties, but insufficient to make the emulsion copolymer alkaline soluble.

The polymer emulsion of the present invention is prepared in the presence of suitable anionic, cationic or nonionic emulsifiers or mixtures thereof. Optionally, protective colloids, illustrated by polyvinyl alcohol and hydroxyethyl cellulose, may also be present. Suitable nonionic emulsifying agents include alkylphenoxypolyethoxyethanols having alkyl groups of about 7 to 18 carbon atoms and 10 to 60 or more oxyethylene units, such as octylphenoxypolyethoxyethanols, methyloctylphenoxypolyethoxyethanols, nonylphenoxypolyethoxyethanols, dodecylphenoxypolyethoxyethanols; also ethylene oxide derivatives of long chained carboxylic acids, such as lauric, myristic, palmitic, oleic, and stearic acid, containing 10 to 60 oxyethylene units per molecule; also analogous ethylene oxide condensates of long-chained alcohols, such as octyl, decyl, lauryl, stearyl and cetyl alcohols, ethylene oxide derivatives of etherified or esterified polyhydroxy compounds having a hydrophobic component, such as lauric, myristic, palmitic, oleic, and stearic acid, containing 10 to 60 oxyethylene units per molecule; also analogous ethylene oxide condensates of long-chained alcohols, such as octyl, decyl, lauryl, stearyl, and cetyl alcohols, ethylene oxide derivatives of etherified or esterified polyhydroxy compounds having a hydrophobic hydrocarbon chain, such as sorbitan monostearate containing 10 to 60 oxyethylene units; also block copolymers of ethylene oxide and propylene oxide comprising a hydrophobic propylene oxide section combined with one or more hydrophilic ethylene oxide sections. Suitable anionic emulsifying agents include higher fatty alcohol sulfates, such as sodium lauryl sulfate, the alkylaryl sulfonates, such as the sodium salt of t-octylphenyl sulfonate, the sodium dioctyl sulfosuccinates, disodium fatty alkyl alkanolamide sulfosuccinate, and the ammonium salt of a sulfate or phosphate ester of an alkylphenoxy poly(ethyleneoxy) ethanol, where the oxyethylene content is from 3 to 30 moles per alkylphenol. Suitable cationic emulsifiers include N-dodecyl trimethyl ammonium chloride, and N-vinyl benzyl trimethyl ammonium chloride and the like. Generally, the copolymer emulsions of this invention contain from 3 to 10 percent, preferably from 4.5 to 6 percent, emulsifiers based on the weight of the monomers (solids).

It is preferred that a polymerization process is used in making the copolymer emulsions of the invention. A aqueous phase is prepared first containing water, a small portion of a nonionic emulsifier, sometimes also a mixture of anionic and nonionic emulsifiers, and a very small amount of ferrous sulfate, being a redox component in the finishing catalyst system for the copolymer emulsion. The aqueous phase is purged well with nitrogen, and heated to 60 to 70°C. A small portion of

monomer, often a mixture of two monomers, is then added followed by a suitable amount of initial catalyst, most often from about 1 to 3 percent based on the weight of the initial monomer charge. Often it is advantageous to use potassium persulfate as tha catalyst because the resulting copolymer has better resistance to heat discoloration. But sodium or ammonium persulfates can also be used. After the emulsion polymerization has initiated, the rest of the monomers are gradually added to the reaction mixture, often emulsified in water together with the latent crosslinking monomers and the active crosslinking monomers Generally, the gradual addition of the monomers is carried out over a time period of two and a half to five hours. More catalyst solution is also added gradually to maintain the polymerization reaction at a temperature from 70 to 80°C. Oftem cooling is applied to the reaction vessel by means of a waterbath to remove the excess heat of polymerization. Usually, a total of 0.2 to 1 percent of catalyst based on the weight of the monomers, is added over the course of the emulsion polymerization. After all the monomer has been added, a small amount of an organic peroxide, such as t-butyl hydroperoxide and cumene hydroperoxide, and the like are added for the finishing step, together with a small amount of a reducing agent, such as sodium metabisulfate, sodium formaldehyde sulfoxylate and zinc formaldehyde sulfoxylate In place of an organic peroxide, hydrogen peroxide or persulfates, such as potassium, sodium or ammonium persulfates may also be used. The terminal catalyst necessary to finish the reaction is generally about 10 to 30 percent by weight of the total amount of catalyst consumed during the reaction. The reducing agent is ordinarily added in the necessary equivalent amount. Normally no buffering agent is required to keep the pH between 3 and 5. If necessary, dilute ammonia may be added from time to time to adjust the pH within those limits. Others auxiliary agents may be added to the finished copolymer emulsion, such as defoamers, biocides and the like.

The emulsion copolymers of the present invention have a solids content from 35 to 55 percent, preferably from 40 to 50 percent. The viscosity of the copolymer emulsion of the present invention is generally low. It is preferred that the viscosity not be more than 150 cps as measured with a Brookfield viscometer at 50 RPM. The molecular weight of the copolymer of the present invention is very high. Because the presence of the active crosslinking monomer during the copolymerization results in slight crosslinking and much branching of the macromolecules, it is very difficult to accurately measure the molecular weight. It is, however, desirable to measure the intrinsic viscosity of the copolymer, which is an indirect measure of molecular weight, for comparative purposes. The intrinsic viscosity is determined by conventional techniques, i.e. in accordance with the procedure described on pages 309-314 of the book "Principles of polymer Chemistry" by Paul Flory (Cornell University Press, 1953).

The copolymer emulsions of the present invention may be used in this form as a durable sizing composition, but it is preferred that certain reactants and size bath additives first be blended with with the copolymer emulsion. For example, to prevent premature crosslinking and to facilitate application in the pad bath, ammonium hydroxide or another suitable alkaline material is preferably added to the emulsion to adjust the pH of the composition from its intial acid condition to a pH of about 5 to 10, preferably about 6.5 to 7.

Additionally, it is preferable to also include in the aqueous sizing composition a small amount, i.e. from about 1 to 3 percent by weight, of a hydroxyl containing water soluble polymer, such as polyvinyl alcohol, hydroxyethyl cellulose, or starch. To enhance the durability of the water soluble hydroxy containing polymer on the yarn, a small amount, i.e. 0.1 to 3 percent by weight of a reactive resin may optionally be included in the durable sizing composition. Suitable reactive resins include aminoplasts, such as melamine-formaldehyde resins, glyoxal resins, urea-formaldehyde resins and the like; also monmeric and polymeric epoxy resins, dialdehydes, ethyleneurea-glyoxal codensates, and aziridines may be employed to increase the durability of the water soluble hydroxy polymers. Catalysts for enhancing the reactivity of both the latent crosslinking monomers, contained in the copolymer, and the aminoplasts and the like, also may optionally be added to the sizing composition. Metal salts, such as magnesium chloride, aluminum chloride, zinc nitrate and the like, are suitable for this purpose, as are ammonium salts of strong acids, such as ammonium chloride, nitrate or sulfate. Especially useful as catalysts for the aminoplasts are sulfonic acids, such as paratoluene sulfonic acid and methane sulfonic acid. The catalyst may be suitably used at a concentration ranging from 0.01 to 10 percent, preferably 0.1 to 3 pearcent based on the weight of the sizing composition. Slasher bath additives such as lubricants, defoamers, antistats and the like are also often used. Sizing formulations, containing these additives are well known in th art.

The copolymer emulsions of the present invention may be applied to the yarn using conventional equipemnt, such as a textile slasher. Textile warp sizing is a well known art. Sizing formulations and the equipment, such as a slasher, are described, for example, in detail in the book "The Technology of Warp Sizing", Columbine Press, Manchester,

England (1964). It is particularly important that the runability of the size composition be good. The liquid sizing composition is applied to the yarn by means of a padder. Often, the sizing composition will dry partially on the padroll and causse a build-up of polymer on teh roll. This is very undesirable because the partially dried polymer will stick to the yarn and cause difficulties later during the weaving process. However, the copolymer emulsion of the present invention run particularly well on the slasher, because they still redisperse easily, and, therefore, cause no polymer build-up on the padroll. It was found that a minimum amount of a mono-or dicarboxylic acid, such as 0.5 -5 percent, preferably 1-2.5 percent, is necessary in the copolymer emulsion based on the weight of the other monomers, to prevent padroll build-up.

In the following examples, illustrative of the present invention, the parts and percentages are by weight and the temperaturees are in Celsius degrees.

The following abbreviations are used:

BA for butyl acrylate

MMA for methyl methacrylate

EA for ethyl acrylate

STY for styrene

AN for acrylonitrile

VAC for vinyl acetate

BMA for butyl methacrylate

2-EHA for 2-(ethylhexyl) acrylate

VCR for vinyl crotonate

TAC for triallyl cyanurate

AA for acrylic acid

IA for itaconic acid

Example 1

The following was charged to a 100 gallon (379 liter) stainless steel pilot reactor equipped with a variable agitator, temperature control system, feedpumps, means for purging the reactor with nitrogen, and a jacket for heating and cooling:

| | |
|---|---|
| Water | 234 lbs (106.14 kg) |
| Triton X 305(1) | 5 lbs (2.27 kg) |
| Emcol K8300(2) | 8 oz (227 grams) |
| Ferrous sulfate | 1.3 grams |

The contents of the reactor were heated to 68°C after which the reactor was purged with nitrogen. After the heat-up and purge the following monomers were added to the reactor:

| | |
|---|---|
| Butyl acrylate | 29 lbs (13.15 kg) |
| Methyl methacrylate | 7 lbs (3.18 kg) |

This was followed by the addition of the initial catalyst solution:

| | |
|---|---|
| Water | 12 lbs (5.44 kg) |
| Potassium persulfate | 12 oz (340 grams) |

The polymerization initiated within 5 minutes as indicated by a 2°C rise in temperature of the reactor. The following monomer emulsion previously mixed, was then added gradually by means of an addition pump at a rate of 2.54 lbs/minute (1.15 kg/minute) over a 3 hour period:

| | |
|---|---|
| Water | 80 lbs (36.29 kg) |
| Emcol K8300(2) | 11 lbs (4.99 kg) |
| Triton X 305(1) | 9 lbs (4.08 kg) |
| N-Methylol acrylamide (49%) | 26 lbs (11.79 kg) |
| Acrylamide (50%) | 3 lbs (1.36 kg) |
| Methyl methacrylate | 83 lbs (37.65 kg) |
| Butyl acrylate | 241 lbs (109.32 kg) |
| Itaconic acid | 4 lbs 4 oz (1.93 kg) |
| Triallyl cyanurate | 6 oz (170 grams) |

The temperature of the reactor content was allowed to rise to 74-75°C and was maintained there by the gradual addition at a rate of 0.39 lbs/minute (177 grams/minute) over a 3 hour period of the following catalyst solution:

| | |
|---|---|
| Water | 70 lbs (31.75 kg) |
| Potassium persulfate | 1 lb (454 grams) |

After 3 hours, when all the monomer emulsion had been added to the reactor the following finishing catalyst solution was added:

| | |
|---|---|
| Water | 5 lbs (2.27 kg) |
| t-Butyl hydroperoxide | 1 lb 2 oz (511 grams) |
| Triton X 305(1) | 3 oz (85 grams) |

followed by the following reducing solution:

| | |
|---|---|
| Water | 5 lbs (2.27 kg) |
| Hydrosulfite AWC(3) | 11 oz (312 grams) |

The temperature of the batch was maintained at 70°C for an additional 30 minutes, after which the polymer emulsion was cooled to room temperature. The following was then added:

| | |
|---|---|
| Water | 3 lbs (1.36 kg) |
| Proxel GXL (7) | 1½ oz (43 grams) |
| Formaldehyde (37%) | 1½ oz (43 grams) |
| Defoamer 831 | 1½ oz (43 grams) |
| Triton X 305 | 3 oz (85 grams) |

A total of 32 gallons (121 liters) of rinsewater was added to the emulsion for clean up of the pumps and lines.

Notes: (1) Triton X 305 is a 70 percent solution in water of an octylphen-xypolyethoxyethanol containing 30 moles of oxyethanol per mole of octyl phenol. It is supplied by the Rohm & Haas Company.

(2) Emcol K8300 is a 40 percent solution in water of disodium fatty alkyl alkanolamide sulfosuccinate supplied by the Witco Chemical Company.

(3) Hydrosulfate AWC is a brand of sodium formaldehyde sulfoxylate supplied by the Diamond Shamrock Company.

(4) In measuring the intrinsic viscosity, a 1 ml sample of the polymer emulsion is added to 100 ml of N-methyl pyrrolidone, and the mixture is agitated and filtered. The flowtime of the solution so prepared is then compared at 30°C with the flowtime of the N-methyl pyrrolidone solvent using a Ubbelohde viscometer (obtained from the Cannon Instrument Company). The relative viscosity is the fraction obtained by dividing the flowtime of the solution by the flowtime of the solvent. The Huggins equation is then used to calculate the intrinsic viscosity from the relative viscosity measurement and from the copolymer solids content in grams per 100 ml of solution. The use of the Huggins equation for intrinsic viscosity calculations is described in detail in the "Encyclopedia for Polymer Science and Technology", (Wiley, New York, 1971) Vol. 15, page 634.

(5) The particle size was measured by light transmission using a Beckman spectrophotometer - (Spectronic 20). The method is described in detail in "Official Digest of the Paint and Varnish Industry", February 1959, pp. 200-213.

(6) The glass transition temperature was calculated using the Fox equation, described in Bull. Am. Physics Soc. Vol. 1,3, p. 123 (1956).

(7) Proxel GXL is biocide supplied by the ICI Company.

(8) Defoamer 831 is a defoamer supplied by the Hercules Company. The copolymer emulsion thus obtained had the following properties:

| | |
|---|---|
| solids (30 min at 130°C drying) | 44.5% |
| pH | 3.6 |
| viscosity (Brookfield at 50 RPM) | 40 cps |
| intrinsic viscosity (measured in N-methyl pyrrolidone at 30°C)(4) | 0.69 dl/g |
| particle size (by light transmission(5) | 0.22 microns |
| glass transition temperature (Tg)(6) | -30°C |

Example 2

A sizing composition was prepared by blending 20 gallons (76 liters) of the copolymer emulsion of Example 1 with a solution of 63.5 lbs (28.8 Kgs) of polyvinyl alcohol(1) in 80 gallons (309 liters) of water. To this was added 1.75 gallons (6.6 liters) of a 80% solids melamine formaldehyde resin(2), 1.2 gallons (4.5 liters) of a 40% active solution of paratoluene sulfonic acid(3), 1 gallon (3.8 liters) of an ethoxylated castor oil(4), 1.5 gallons (5.7 liters) of a silicone lubricant(5) and enough water to make a total of 150 gallons (568 liters) of the mixture.

A yarn of a polyester-cotton blent (65/35) was sized with this composition and dried on heated cans at a temperature of 132°C. After weaving this yarn, the fabric was heat-set at 204°C for 20 seconds and then processed normally by desizing, scouring and bleaching. The retention of size on the yarn was 78%(6).

Notes: (1) Elvanol T-66, a grade of polyvinyl alcohol supplied by E.I. DuPont and Co.

(2) Resin MW supplied by the American Cyanamid Company.

(3) Catalyst 4040, supplied by the American Cyanamid Company.

(4) Texwax 11 supplied by Palmetto Chemical Company.

(5) Silicone 2162 supplied by the General Electric Company.

(6) The retention was determined as follows: 20 pieces of sized yarn were dried to constant weight at 105°C for 1 hour. The percent add-on was then determined by weight difference. A piece of fabric woven from unsized and sized yarn was then processed in a normal manner and the weights compared.

Example 3

The following was charged to a 2 liter glass polymerization reactor equipped with an agitator, thermometer, feedpumps, nitrogen inlet tube and a waterbath for heating and cooling:

| | |
|---|---|
| Water | 850 g |
| Triton X 305 | 18 g |
| Ferrous sulfate (1% solution in water) | 1 g |

The contents of the reactor were heated to 68°C by means of a heated waterbath while purging the contents of the glassvessel with a nitrogen stream. After the heat-up the following monomers were added to the reactor:

| | |
|---|---|
| Butyl acrylate | 103 g |
| Vinyl acetate | 2.6 g |

This was followed by the addition of the initial catalyst solution:

| | |
|---|---|
| Water | 129 g |
| Potassium persulfate | 2.6 g |

The polymerization initiated within 5 minutes as indicated by a 2°C rise in temperature of the reactor. The following emulsion was then added gradually over 3 hours:

| | |
|---|---|
| Water | 248 g |
| Emcol K8300[(2)] | 40 g |
| Triton X 305[(1)] | 30 g |
| N-Methylol acrylamide (49%) | 93 g |
| Acrylamide (59%) | 10 g |
| Vinyl acetate | 293 g |
| Butyl acrylate | 855 g |
| Itaconic acid | 15 g |
| Triallyl cyanurate | 1.2 g |

The temperature of the reactor content was allowed to rise to 74-75°C and was maintained there by the gradual addition over 3 hours of the following catalyst solution:

| | |
|---|---|
| Water | 129 g |
| Potassium persulfate | 2 g |

After 3 hours, when all the monomer emulsion had been added to the reactor the following finishing catalyst solution was added:

| | |
|---|---|
| Water | 20 g |
| t-Butyl hydroperoxide | 1 g |
| Triton X 305[(1)] | 1 g |

followed by the following reducing solution:

| | |
|---|---|
| Water | 20 g |
| Hydrosulfite AWC[(3)] | 0.5 |

The temperature of the batch was maintained at 70°C for an additional 30 minutes, after which the polymer emulsion was cooled to room temperature.

The copolymer emulsion thus obtained had the following properties:

| | |
|---|---|
| solids (30 min at 130°C drying) | 45.8% |
| pH | 3.3 |
| viscosity (Brookfield at 50 RPM) | 52 cps |
| intrinsic viscosity (measured in N-methyl pyrrolidone at 30°C)(4) | 0.66 dl/g |
| particle size (by light transmission)(5) | 0.18 microns |
| glass transition temperature (Tg)(6) | -39°C |

For notes (1) to (6) refer to Example 1.

Examples 4-15

Table 1 contains the composition of Examples 4 to 15. The polymerization procedure and recipe of Example 1 was followed in each case except that the ratios of the hardening and softening monomers were varied. In a few cases, as indicated, the carboxylic acid and the active crosslinking monomer were also varied. Table 2 shows the copolymer emulsion properties and the retention values after application to a yarn or fabric, respectively.

Table 1

| Example | Monomers(1) softening | hardening | Ratio(2) | | Tg(°C) | Intrinsic Viscosity |
|---|---|---|---|---|---|---|
| 4 | BA | MMA | 85 | 15 | -41 | 0.84 |
| 5 | BA | MMA | 70 | 30 | -24 | 0.72 |
| 6 | BA | MMA | 60 | 40 | -11 | 0.81 |
| 7 | BA | - | 100 | - | -56 | 0.65 |
| 8 | BA | MMA(3) | 75 | 25 | -30 | 1.4 |
| 9 | BA | AN | 80 | 20 | -35 | 1.3 |
| 10 | BA | AN | 70 | 30 | -23 | 0.79 |
| 11 | BA | MMA(4) | 75 | 25 | -30 | - |
| 12 | BA | VAC | 50 | 50 | -20 | 0.77 |
| 13 | 2-EHA | MMA | 50 | 50 | -8 | 1.0 |
| 14 | BA | STY | 75 | 25 | -30 | 1.3 |

Notes: (1) Only the hardening and softening monomers are denoted here. All other monomers and amounts are the same as in Example 1, with the exception noted below.

(2) The "Ratio" denotes the relative by weight ratio of softening and hardening monomers. The total amount of both the hardening and softening monomers of Example 1 was maintained for Examples 4-15.

(3) The active crosslinking monomer in Example 8 was vinyl crotonate which was substituted for triallyl cyanurate.

Example 1 and Examples 3-7 and Examples 9-15 contained triallyl cyanurate.

(4) The carboxylic acid in Example 11 was acrylic acid, which was substituted for itaconic acid. Exampl4e 1 and Examples 3-10 and Examples 12-15 contained itaconic acid.

Table 2

| Example | Solids % | Viscosity (cps) | pH | Particle size (microns) | Retention % |
|---|---|---|---|---|---|
| 4 | 45.6 | 39 | 3.3 | 0.20 | 86.1 |
| 5 | 47.6 | 62 | 3.2 | 0.20 | 89 |
| 6 | 46.8 | 50 | 3.3 | 0.21 | 87 |
| 7 | 43.7 | 60 | 3.6 | - | 82 |
| 8 | 47.6 | 47 | 3.5 | 0.21 | 78 |
| 9 | 46.1 | 56 | 3.6 | 0.21 | 84 |
| 10 | 44.4 | 44 | 6.0 | 1.19 | 89 |
| 11 | 47.5 | 1040 | 3.3 | 0.25 | 89 |
| 12 | 45.5 | 101 | 3.4 | 0.17 | 98 |
| 13 | 46.8 | 43 | 3.6 | 0.18 | 85 |
| 14 | 42.7 | 40 | 3.4 | 0.15 | 82 |
| 15 | 45.2 | 32 | 3.6 | 0.24 | 100 |

The following examples describe retention experiments using a size composition to treat woven unsized fabric made from a cotton-polyester blend.

Example 16

111.6 g of the coplymer emulsion of Example 7 was blended with 3 g of a 40% solution of paratoluenesulfonic acid, and water was then added to make 250 ml of a sizing composition. A piece of unsized polyester-cotton cloth was treated with this solution and then dried at 121°C for 60 seconds and cured at 205°C for 30 seconds. The fabric was weighed before and after the treatment. The treated fabric was then desized with water for 1 minute at 63°C, scoured for 1 minute at 82°C with a 3% caustic solution, held in a laboratory J-box for 1 hour at 93°C, washed for 1 minute in 62°C water and then bleached with a solution of:

1.5% sodium silicate

1% caustic

0.1% octylphenoxypolyethoxyethanol containing 10 moles of oxyethylene per mole of octylphenol - (Triton X100 supplied by the Rohm and Haas Company) 3% hydrogen peroxide (50% active) and water to 100%,

for 1 minute at 32°C. After this the fabric was again kept for 1 hour in a J-box at 93°C, washed for 1 minute at 63°C, and dried. The fabric weights were compared before and after this treatment and the retention calculated. The retention was 82 percent. Because of the Tg below 0°C of the polymer, the fabric was soft and did not have a harsh feel as is common with sizing compositions containing polymers with a Tg of greater than 0°C.

Examples 17-24

The copolymer emulsions of Examples 4 -15 were evaluated for retention according to Example 16. The results are tabulated in the last column of Table 2.

It can be seen that in each case the retention was excellent.

**Claims**

1. An aqueous copolymer emulsion containing colloidally suspended therein a copolymer which forms an insoluble crosslinked network upon the application of energy which is resistant to hydrolysis in a caustic solution comprising:

an aqueous medium containing on a percent by weight of the solids basis from 50 to 95% of a softening monomer, from 0.5 to 10% of a latent crosslinking monomer, 0.01 to 0.5% of an active crosslinking monomer, 0.5 to 5% of an ethylenically unsaturated carboxylic acid and from 0 to 35% of a hardening monomer, said hardening monomer in an amount effective to provide a copolymer emulsion containing a copolymer with a Tg of less than or equal to o°C.

2. Copolymer emulsion of claim 1 wherein the Tg of the copolymer in the copolymer emulsion is from -60 ot 0°C.

3. Copolymer emulsion of claim 2 wherein the copolymer emulsion has a solids content of from 35 to 55%.

4. Copolymer emulsion of claim 1 wherein the softening monomer has a Tg of from -20°C to -80°C.

5. Copolymer emulsion of Claim 1 wherein said softening monomer is selected from the group consisting of alkyl acrylates, alkyl methacrylates, alpha-olefins, maleate, fumarate and itaconate esters of $C_1$ -$C_8$ alcohols, and vinyl esters of alkanoic acids having from 3 to 18 carbons.

6. Copolymer emulsion of Claim 1 wherein said latent crosslinking monomer comprises an alkylolamide of an alpha, beta ethylenically unsaturated carboxylic acid having 3 to 10 carbon atoms.

7. Copolymer emulsion of Claim 1 wherein said active crosslinking monomer comprise compounds which contain 2 to 5 ethylenically unsaturated groups in one molecule separated by an ester or ether group, or by an aromatic or nitrogenous ring structure, where the unsaturated groups are capable of undergoing addition polymerization by free radical means.

8.Copolymer emulsion of Claim 1 wherein said ethylenically unsaturated carboxylic acid is selected from the group consisting of monocarboxylic acids and dicarboxylic acids.

9.Copolymer emulsion of Claim 1 wherein said hardening monomer is selected from the group consisting of aromatic vinyl monomers, alkly methacrylates with an alkyl goup having from 1-2 carbon atoms, vinyl esters of aromatic acids, vinyl halides, and vinyl esters of alkanoic acids having from 1-2 carbons.

10. Copolymer emulsion of Claim 5 wherein said softening monomer is selected from the group consisting of ethyl acrylate, n-butyl acrylate and 2-(ethylhexyl) acrylate.

11. Copolymer emulsion of Claim 6 which comprises 2 to 6% of a latent crosslinking monomer.

12. Copolymer emulsion of Claim 11 wherein said latent crosslinking monomer is selected from the group consisting of N-methylol acrylamide, N-methylol methacrylamide, and N-methylol allyl carbamate.

13. Copolymer emulsion of Claim 11 wherein said latent crosslinking monomer is selected from the group consisting of acrylamide, methacrylamide, and allyl carbamate.

14. Copolymer emulsion of Claim 11 wherein said latent crosslinking monomer is selected from the group consisting of N-)alkoxymethyl) acrylamide, N-(alkoxymethyl) methacrylamide and N-(alkoxymethyl) allyl carbamate, where the alkyl group has from 1-8 carbon atoms.

15. Copolymer emulsion of Claim 7 which comprises 0.05 to 0.25% of an active crosslinking monomer.

16. Copolymer emulsion of Claim 15 wherein said active crosslinking monomer is triallylcyanurate.

17. Copolymer emulsion of Claim 8 which comprises 1 to 2.5% of an ethylanically unsaturated carboxylic acid.

18. Copolymer emulsion of Claim 17 wherein said ethylenically unsaturated carboxylic acid is itaconic acid.

19. Copolymer emulsion of Claim 1 wherein said hardening monomer is selected from the group consisting of methyl methacrylate, styrene, acrylonitrile, and vinyl acetate.

20. Copolymer emulsion of Claim 1 wherein said aqueous emulsion has a solids content from 40 to 50 percent.

21. Copolymer emulsion of Claim 1 wherein said copolymer has a glass transition temperature from -40°C to 0°C.

22. Copolymer emulsion of Claim 1 further comprising emulsifiers.

23. Copolymer emulsion of Claim 22 further comprising a redox component.

24. Copolymer emulsion of Claim 22 further comprising a catalyst for polymerization of the copolymers in the emulsion.